# EUROPEAN PATENT SPECIFICATION

(11) **EP 2 204 350 B1**
(45) Date of publication and mention of the grant of the patent: **06.01.2016**
(21) Application number: 08839053.9
(22) Date of filing: 22.08.2008
(51) Int. Cl.: C01B 35/18, C09D 5/32

(54) **PROCESS FOR PRODUCTION OF SURFACE-COATED HEXABORIDE PARTICLE PRECURSOR, SURFACE-COATED HEXABORIDE PARTICLE PRECURSOR, SURFACE-COATED HEXABORIDE PARTICLES, DISPERSION OF THE PARTICLES, AND STRUCTURES AND ARTICLES MADE BY USING THE PARTICLES**
VERFAHREN ZUR HERSTELLUNG EINES OBERFLÄCHENBESCHICHTETEN HEXABORIDPARTIKELVORLÄUFERS, OBERFLÄCHENBESCHICHTETER HEXABORIDPARTIKELVORLÄUFER, OBERFLÄCHENBESCHICHTETE HEXABORIDPARTIKEL, PARTIKELDISPERSION SOWIE ANHAND DER PARTIKEL HERGESTELLTE STRUKTUREN UND ARTIKEL
PROCÉDÉ DE FABRICATION D'UN PRÉCURSEUR DE PARTICULES D'HEXABORURE ENROBÉES EN SURFACE, PRÉCURSEUR DE PARTICULES D'HEXABORURE ENROBÉES EN SURFACE, PARTICULES D'HEXABORURE ENROBÉES EN SURFACE, DISPERSION DES PARTICULES ET STRUCTURES ET ARTICLES OBTENUS À L'AIDE DES PARTICULES

(30) Priority: 19.10.2007 JP 2007272267
(43) Date of publication of application: 07.07.2010
(73) Proprietor: Sumitomo Metal Mining Co., Ltd., Tokyo, 105-8716 (JP)
(72) Inventor: TOFUKU, Atsushi, Ichikawa-shi Chiba 272-8588 (JP)
(74) Representative: TBK
(86) International application number: PCT/JP2008/065479
(87) International publication number: WO 2009/050946

(56) References cited:
- JP-A- 2003 277 045
- JP-A- 2003 321 218
- JP-A- 2004 204 173
- JP-A- 2006 193 376
- JP-A- 2006 340 675
- JP-A- 2007 308 341

## Description

### TECHNICAL FIELD

The present invention relates to a precursor of surface-coated hexaboride particles to be used in production of surface-coated hexaboride particles formed with silica coating layers, respectively, and a production method of such a precursor, and particularly to surface-coated hexaboride particles exhibiting a remarkably improved water resistance, and a precursor thereof, as well as improvements of a dispersion containing surface-coated hexaboride particles dispersed therein, and the like.

### BACKGROUND ART

Coated films, various kneaded-resin substrates, laminated glasses, and the like each containing hexaboride particles represented by LaB₆ or the like have such properties that light transmittances are high in a visible-light region and reflectances are low then while light transmittances are low in a near-infrared region, so that they are recently utilized as solar radiation shielding materials, respectively (see Japanese Patent Application Laid-Open Publication No. 2000-169765).

Incidentally, it is known that fine hexaboride particles are subjected to decomposition and degradation at surfaces thereof due to moisture or water in air (formation of oxides, hydroxides, or the like), in a manner that finer particles lead to greater ratios of loss of solar radiation shielding effects due to such degradation. Solar radiation shielding materials are basically used in outdoors by virtue of characteristics thereof, and often undergo requirement of higher weather resistances. In case of some of the optical materials (films, resin sheets, and the like) containing fine hexaboride particles, the hexaboride particles tend to be decomposed in surfaces thereof by gradual permeation of moisture, water, or the like in air into matrices of the particles in a manner to increase a light transmittance in a wavelength region of 200 to 2,600nm over time, thereby bringing about a problem of a gradually degraded solar radiation shielding performance.

As such, there has been proposed a method to use a surface treatment agent such as alkoxysilane to coat surfaces of hexaboride particles, for the purpose of improving a water resistance of the hexaboride particles (see Japanese Patent Application Laid-Open Publication No. 2003-277045).

However, when the concentration of alkoxysilane or the like is increased together with that of fine hexaboride particles in case that the hexaboride particles are so fine to exhibit an average primary particle diameter of 200nm or less, the method as described in the Japanese Patent Application Laid-Open Publication No. 2003-277045 tends to result in agglomeration of the fine hexaboride particles with one another in the course of hydrolysis reaction and polycondensation reaction, resulting in such a state that the surface treatment is applied just onto agglomerates of the hexaboride particles. Thus, in case of conduction of a mechanical dispersing treatment such as by a medium agitation mill after the surface treatment, fine hexaboride particles having formed cluster structures through silica components are dissociated from one another in a manner to be turned into fine hexaboride particles exposing those surface portions having no silica coating layers thereon, so that it has been difficult to provide various substrates with sufficient transparency and water resistance.

On the other hand, to improve a dispersion stability of hexaboride particles dispersed in a coating liquid for a solar-radiation shielding film, there has been also developed a method for forming silica coating layers on surfaces of hexaboride particles by using a silicate, an acidic silicic acid solution, a hydrolyzable silane compound, or the like (see Japanese Patent Application Laid-Open Publication No. 2004-204173).

Further, according to the method described in the Japanese Patent Application Laid-Open Publication No. 2004-204173, it has been also proposed to previously form coatings of zirconium oxide or the like on surfaces of hexaboride particles so as to promote formation of silica coating layers onto the surfaces of the hexaboride particles, and to subsequently coat a silicate, an acidic silicic acid solution, a hydrolyzable silane compound, or the like onto the coatings.

However, the method described in the Japanese Patent Application Laid-Open Publication No. 2004-204173 is aimed to improve a dispersion stability of hexaboride particles in the coating liquid for a solar-radiation shielding film, and is thus a surface treating method which is not subjected to a solvent removing step and a drying/firing step after formation of silica coating layers, so that the method has entailed a problem that the surface treatment coatings are considerably low in mechanical strength and chemical stability such that the thus obtained surface treated powder is hardly improved in water resistance as compared to an untreated powder.

In turn, methods have been also proposed which are each configured to disperse fine inorganic particles by adopting a substance such as an anionic, cationic, or nonionic surfactant, an ester, a fatty acid, a resin acid, or the like, and to add a silane compound thereto, to thereby bond it onto surfaces of the particles. However, it is then impossible to effectively hydrolyze the silane compound acting as a surface treatment agent because strong influences are then brought about by hydrophobic groups such as long chain alkyl groups, fluorine-containing alkyl groups, or the like in molecules of the adopted substance, thereby causing a problem that a sufficient amount of functional chemical species is not bonded to particle surfaces.

Further, in order to practically use a wet-type surface treating method to be accompanied by a cost for condensation of a treatment liquid and for solvent removal therefrom, it is required to set a concentration of hexaborides in the treatment liquid at a value as high as possible. However, due to the above-mentioned reasons, there has not been yet developed a technique configured to conduct a uniform surface treatment of individual fine hexaboride particles at a high concentration, while keeping a monodispersion state of the fine particles.

Under such technical circumstances, the present inventor has already proposed a method configured to conduct a uniform surface treatment of individual fine hexaboride particles at a high concentration while keeping a monodispersion state of the fine particles, thereby producing surface-coated hexaboride particles formed with silica coating layers, respectively (see Japanese Patent Application No. 2006-140006).

Namely, the production method of surface-coated hexaboride particles as noted just above has been configured to: adsorb an organo-metallic compound onto surfaces of hexaboride particles dispersed in an organic solvent, to thereby keep the hexaboride particles in a highly dispersed state; coat the surfaces of the hexaboride particles having the organo-metallic compound adsorbed thereon, with a hydrolyzable silane compound; remove a solvent from the hexaboride-particle liquid dispersion; and firingly heat the hexaboride particles under a condition of a temperature at or higher than a thermal decomposition temperature of the organo-metallic compound; to thereby obtain surface-coated hexaboride particles.

### DISCLOSURE OF THE INVENTION

It is therefore an object of the present invention to provide, while starting from the above-mentioned production method of surface-coated hexaboride particles having been proposed by the present inventor: a precursor of surface-coated hexaboride particles to be used in production of surface-coated hexaboride particles; and a production method of such a precursor; and to provide: surface-coated hexaboride particles exhibiting a remarkably improved water resistance; and a dispersion containing the surface-coated hexaboride particles dispersed therein.

Namely, the present invention resides in a production method of a precursor of surface-coated hexaboride particles, comprising:
a first step of adding an organo-metallic compound having a function for dispersing hexaboride particles and a function for promoting polymerization of a hydrolyzable silane compound, into a hexaboride-particle liquid dispersion **consisting of an organic** solvent containing hexaboride particles having an average primary particle diameter of 10nm to 1µm dispersed therein, and then mixing them with each other with stirring, to thereby adsorb the organo-metallic compound onto surfaces of the hexaboride particles;
a second step of adding, into the liquid dispersion of the hexaboride particles having the organo-metallic compound adsorbed thereon, a hydrolyzable silane compound as a surface treatment agent, and water, and then mixing them with one another with stirring, to thereby coat a hydrolysis condensate of the hydrolyzable silane compound onto surfaces of the hexaboride particles having the organo-metallic compound adsorbed thereon; and
a third step of heatingly maturing the hexaboride-particle liquid dispersion under a condition of a temperature lower than a thermal decomposition temperature of the organo-metallic compound, and then removing a solvent from the liquid dispersion, to form coatings derived from the surface treatment agent and coated on the hexaboride particles, respectively, the coatings each including a metal element contained in the organo-metallic compound, and silicon; and
the present invention resides in a precursor of surface-coated hexaboride particles obtained by the production method of a precursor of surface-coated **haxaboride particles according to claim 1, wherein the precursor of** surface-coated hexaboride particles comprises:
hexaboride particles each comprising: at least one element selected from Y, La, Ce, Pr, Nd, Sm, Eu, Gd, Tb, Dy, Ho, Er, Tm, Yb, Lu, Sr and Ca; and boron; the hexaboride particles having an average primary particle diameter of 10nm to 1µm;
   adsorption layers of the organo-metallic compound adsorbed on the surfaces of the hexaboride particles, respectively; and
   the coatings derived from the surface treatment agent and formed on the adsorption layers, respectively, the coatings each including the metal **element in the organo-metallic compound, and silicon. Further beneficial embodiments of the precursor are disclosed in dependent claims 3 to 5.**

**Further, the present invention resides in** surface-coated hexaboride particles obtained by heat-**treating the precursor of surface-coated hexaboride particles according to any one of claims 2 to 5 under a condition of a temperature at or** higher than a thermal decomposition temperature of the organo-metallic compound; and
the surface-coated hexaboride particles comprise: hexaboride particles each comprising: at least one element selected from Y, La, Ce, Pr, Nd, Sm, Eu, Gd, Tb, Dy, Ho, Er, Tm, Yb, Lu, Sr and Ca; and boron; the hexaboride particles having an average primary particle diameter of 10nm to 1µm; metal oxide **layers formed by thermal decomposition of the** adsorption layers of the organo-metallic compound adsorbed on the surfaces of the hexaboride particles, respectively; and silica coating layers formed on the metal oxide layers, respectively, the silica coating **layers each including an oxide of the metal element in the organo-metallic compound.**

**The present invention further provides a structural body according to claim 7, a hexaboride-particle dispersion according to claim 8, and use of the hexaboride-particle dispersion according to claim 14. Further beneficial embodiments of the hexaboride-particle dispersion are disclosed in dependent claims 9 to 13.**

According to the production method of a precursor of surface-coated hexaboride particles of the present invention,
the organo-metallic compound having the dispersing function is adsorbed onto the surfaces of the hexaboride particles having the average primary particle diameter of 10nm to 1µm without hydrolysis of the organo-metallic compound itself in the first step, so that the dispersing function of the organo-metallic compound improves the dispersibility of the hexaboride particles in the organic solvent, thereby enabling to keep the hexaboride particles at a higher concentration in a monodispersion state.

Further, in the second step, the hydrolyzable silane compound as the surface treatment agent and water are added into the liquid dispersion of the hexaboride particles having the organo-metallic compound adsorbed thereon, so that the organo-metallic compound having the polymerization promoting function is allowed to be hydrolyzed, and the hydrolyzable silane compound is allowed to be self-condensed in a manner to uniformly coat a hydrolysis condensate of the hydrolyzable silane compound onto surfaces of the hexaboride particles in the monodispersion state.

Moreover, in the third step, the hexaboride-particle liquid dispersion is heatedly matured under a condition of a temperature lower than a thermal decomposition temperature of the organo-metallic compound, and then a solvent is removed from the liquid dispersion, to form coatings derived from the surface treatment agent and coated on the hexaboride particles, respectively, the coatings each including a metal element contained in the organo-metallic compound, and silicon, thereby enabling to produce a precursor of surface-coated hexaboride particles comprising: hexaboride particles having an average primary particle diameter of 10nm to 1µm; adsorption layers of the organo-metallic compound adsorbed on the surfaces of the hexaboride particles, respectively; and the coatings derived from the surface treatment agent and formed on the adsorption layers, respectively, the coatings each including the metal element in the organo-metallic compound, and silicon.

Note that the heating maturation to be conducted under the condition of the temperature lower than the thermal decomposition temperature of the organo-metallic compound in the third step, enables to fully consume ungrown particles remaining in the reaction mixture, thereby restricting production of coagulated clusters including localized silica components of the surface treatment agent coatings and hexaboride particles.

By previously producing and storing the precursor of surface-coated hexaboride particles in a large amount, and by applying a firing heat treatment to a required amount of the precursor of surface-coated hexaboride particles when required, it becomes possible to instantaneously produce surface-coated hexaboride particles which are excellent in water resistance and chemical stability.

Further, the surface-coated hexaboride particles produced by using the precursor of surface-coated hexaboride particles according to the present invention are excellent in water resistance and chemical stability, so that the surface-coated hexaboride particles can be utilized as a solar radiation shielding material to be added into a coated film, various kneaded-resin substrates, laminated glasses, and the like.

### BEST MODES FOR PRACTICING THE INVENTION

The present invention is described below in detail.

### (1) Hexaboride particle:

Hexaboride particles to be adopted in the present invention are each made of: at least one element selected from Y, La, Ce, Pr, Nd, Sm, Eu, Gd, Tb, Dy, Ho, Er, Tm, Yb, Lu, Sr and Ca; and boron; and have an average primary particle diameter of 10nm to 1µm such that the average primary particle diameter is appropriately set within a range of 10nm to 1µm depending on the usage application. For example, it is required to take account of scattering due to the particles, in case of application of the particles to an optically selective transmission film (which means the above-mentioned film configured to transmit therethrough light in a visible-light region and to shield light in a near-infrared region). Upon giving importance to transparency, the hexaboride particles are to have diameters of 200nm or less, and preferably 100nm or less. This is because, larger diameters of fine particles exceeding 200nm lead to scattering of light in a visible-light region of 380nm to 780nm in wavelength due to geometric scattering or Mie scattering in a manner to substantially turn a transmission film into a frosted-glass state, thereby failing to attain a clear transparency. In turn, particle diameters of 200nm or less decrease the above scattering, and enter a Rayleigh scattering region. In the Rayleigh scattering region, scattered light is reduced in inverse proportion to a 6th power of a particle diameter, so that decreased particle diameters reduce scattering to thereby improve transparency of a transmission film. Further, particle diameters of 100nm or less lead to extreme reduction of scattered light, and are thus preferable. Only, such a transparency is not required in some applications, so that the average primary particle diameter is to be appropriately set within a range of 10nm to 1µm.

Thus, in case of constituting an optical filter by adopting the hexaboride particles, the filter is allowed to have a property to reflect or absorb light around 1,000nm in wavelength to thereby shield it, and to transmit therethrough light of 380nm to 780nm. Such a property is derived from an electronic structure specific to a hexaboride, and particularly, the electronic structure exhibits a plasmon resonance of free electrons near 1,000nm in wavelength in a manner to broadly absorb or reflect the light in this region. Further, the hexaboride particles are less in absorption of light in a visible-light region of 380nm to 780nm, and are thus also suitable for other applications for transmitting light in a visible-light region and for shielding near-infrared light, without limited to the application of optical filter. For example, applying the hexaboride particles to window materials of housings, vehicles, and to greenhouses, and the like, brings about such an advantage that near-infrared light around 1,000nm in sunlight is shielded to obtain an improved effect of heat insulation while simultaneously ensuring a see-through ability.

Note that usage amounts of the hexaboride particles for articles such as optical filters, window materials, and the like are appropriately adjustable depending on the required characteristics. In case of LaB₆ for an optical filter for heat insulation by transmitting therethrough light in a visible-light region and by shielding near-infrared light, there can be obtained a heat insulating effect by a filler amount of 0.01g or more per 1m². Although the upper limit of usage amount depends on the required optical characteristics, it is possible to absorb or shield about 50% of a thermal energy of sunlight by a usage amount of 0.1g per 1m², thereby exhibiting a higher heat insulation efficiency per unit weight.

Incidentally, when it is intended to form silica coating layers on surfaces of fine hexaboride particles by adopting a surface treatment agent such as alkoxysilane, or a silicate, silicic acid solution, hydrolyzable silane compound, or the like, it becomes difficult for the particles to disperse in a solvent at a reaction stage due to polarities or hydrogen bonds of reactive groups such as silanol groups or the like on the particle surfaces, resulting in vigorous agglomeration among the particles themselves, thereby making it difficult to achieve a uniform surface treatment for individual particles.

Further, in case of adopting a surfactant, polymeric dispersant, or the like as a dispersant, the hydrolysis efficiency of the silane compound as the surface treatment agent is lowered due to influence of hydrophobic groups in molecules of the dispersant, so that it has been difficult to bond a sufficient amount of functional chemical species onto particle surfaces.

### (2) Organo-metallic compound:

As such, in the present invention, an organo-metallic compound having a function for dispersing hexaboride particles and a function for promoting polymerization of a hydrolyzable silane compound, is added into a hexaboride-particle liquid dispersion **consisting of** an organic solvent containing hexaboride particles dispersed therein, and mixed with each other with stirring, to thereby adsorb the organo-metallic compound onto surfaces of the hexaboride particles, so that the fine hexaboride particles are kept in a highly dispersed state and then the hydrolyzable silane compound as the surface treatment agent can be efficiently hydrolyzed, thereby resultantly allowing for a uniform and sufficient amount of silica coatings on the individual particles.

Note that, when the organo-metallic compound is added into a liquid dispersion not including an organic solvent but including water containing hexaboride particles dispersed therein, the organo-metallic compound is hydrolyzed after addition thereof such that hydrolyzates of the organo-metallic compound itself vigorously agglomerate and then gelate. It is thus impossible to keep the fine hexaboride particles in a highly dispersed state, and to subsequently hydrolyze a silane compound as a surface treatment agent.

It is therefore necessary in the present invention to add an organo-metallic compound into a liquid dispersion **consisting of** an organic solvent containing hexaboride particles dispersed therein.

Here, although the organo-metallic compound to be adopted in the first step is not particularly limited, such a compound is required to be compatible with the organic solvent, high in affinity with and adsorptivity to surfaces of the hexaboride particles, excellent in function for dispersing the hexaboride particles, and excellent in a function for promoting polymerization of the hydrolyzable silane compound, and the coating made of the organo-metallic compound is required to be strong and to restrict permeation of moisture, water, and the like therethrough.

From the above standpoint, suitable organo-metallic compounds are selected from an aluminum alcoholate or polymer thereof, a cyclic aluminum oligomer, an aluminum chelate containing an alkoxy group, a zirconium alcoholate or polymer thereof, a zirconium chelate compound, a titanium alcoholate or polymer thereof, and a titanium chelate compound.

Examples of an aluminum-based organo-metallic compound include: an aluminum alcoholate such as aluminum ethylate, aluminum isopropylate, aluminum sec-butylate, and mono-sec-butoxy aluminum diisopropylate, and a polymer thereof; a cyclic aluminum oligomer such as a cyclic aluminum oxide octylate; and an aluminum chelate compound containing an alkoxy group, such as ethyl acetoacetate aluminum diisopropylate, aluminum tris(ethyl acetoacetate), octyl acetoacetate aluminum diisopropylate, stearyl acetoaluminum diisopropylate, aluminum monoacetyl acetonate bis(ethyl acetoacetate), and aluminum tris(acetyl acetonate), which aluminum chelate compound is obtained from a substitution reaction of a ligand, by: dissolving an aluminum alcoholate into an aprotic solvent, petroleum-based solvent, hydrocarbon-based solvent, ester-based solvent, ketone-based solvent, ether-based solvent, or amide-based solvent to prepare a solution; adding, into the solution, β-diketone, β-ketoester, monohydric or polyhydric alcohol, fatty acid, or the like; and heating and refluxing the resultant solution.

Further, examples of a zirconium-based organo-metallic compound include: a zirconium alcoholate such as zirconium ethylate, and zirconium butylate, and a polymer thereof; and a zirconium chelate compound such as zirconium tributoxy stearate, zirconium tetraacetyl acetonate, zirconium tributoxy acetyl acetonate, zirconium dibutoxy bis(acetyl acetonate), zirconium tributoxy ethyl acetoacetate, and zirconium butoxy acetyl acetonate bis(ethyl acetoacetate).

Moreover, examples of a titanium-based organo-metallic compound include: a titanium alcoholate such as methyl titanate, ethyl titanate, isopropyl titanate, butyl titanate, and 2-ethylhexyl titanate, and a polymer thereof; and a titanium chelate compound such as titanium acetyl acetonate, titanium tetraacetyl acetonate, titanium octylene glycolate, titanium ethyl acetoacetate, titanium lactate, and titanium triethanol aminate.

These organo-metallic compounds are highly reactive with inorganic substance surfaces, are apt to adsorb onto surfaces of fine hexaboride particles, and tend to outwardly orient organic chains in the molecules of the compounds from the surfaces of the fine hexaboride particles, thereby enabling to remarkably improve the dispersibility of the fine hexaboride particles. Further, such organo-metallic compounds exhibit faster rates of hydrolysis reaction and polycondensation reaction than those of hydrolyzable silane compounds, and the organo-metallic compounds in themselves act as crosslinking agents of silane monomers or oligomers, in a manner to each have a function to promote polymerization of a hydrolyzable silane compound to be added in the second step, so that the organo-metallic compounds never obstruct formation of silica coatings, unlike the above-mentioned surfactants and polymeric dispersants.

Relatedly, most types of hexaboride particles are insufficient in reactivity with hydrolyzable silane compounds, and thus simple carriage of a hydrolyzable silane compound onto hexaboride particles results in weak attaching forces thereof to particle surfaces, such that the silane compound is occasionally desorbed from the particles upon application of a shearing force of a certain value or more thereto. Nonetheless, when the above organo-metallic compound is adsorbed onto surfaces of hexaboride particles, the hexaboride particle are improved in affinity with a silane compound, thereby enabling to more strongly attach a hydrolyzable silane compound to the hexaboride particles.

To be adopted as a method for adsorbing the organo-metallic compound onto hexaboride particles, is a wet-type one configured to add the organo-metallic compound into a hexaboride-particle liquid dispersion **consisting of** an organic solvent containing hexaboride particles dispersed therein, and to mix them with each other with stirring, as described above. Upon conducting such a wet-type method, it is desirable: to previously conduct a cracking treatment of agglomerates of fine particles in an organic solvent by a ball mill, sand mill, ultrasonic homogenizer, or the like, and to subsequently add an organo-metallic compound into the uniformly dispersed slurry to thereby cause the organo-metallic compound to act on particle surfaces; or to add such a surface treatment agent into the solvent, simultaneously with the cracking treatment.

Note that the organic solvent in the first step is not particularly limited insofar as the solvent allows for dissolution therein of a silane compound represented by the general formula (I): Si(OR¹)₄ (wherein R¹ represents the same or different monovalent hydrocarbon group having 1 to 6 carbon atoms), or a partial hydrolysis product thereof, and water, and examples of such an organic solvent include alcohols, cellosolves, ketones, ethers, and the like, where alcohols are preferable. Examples of alcohols include an alcohol solvent represented by a general formula (II): R²OH (wherein R² represents a monovalent hydrocarbon group having 1 to 6 carbon atoms), and specifically, methanol, ethanol, isopropanol, butanol, and the like. Note that hydrolysis rates of the above-mentioned organo-metallic compound and of a silica to be described later are to vary depending on the number of carbon atoms of the alcohol to be used here, so that it is possible to appropriately select a kind of alcohol so as to control an intended coating amount and the like of a solid content to be produced.

The organo-metallic compound is preferably provided in an addition amount of 0.05 part by weight to 300 parts by weight when calculated as a metal element, relative to 100 parts by weight of hexaboride particles, and is more preferably within a range of 0.3 part by weight to 150 parts by weight. Addition amounts of the organo-metallic compound less than 0.05 part by weight sometimes lead to insufficiency of an effect to coat particle surfaces, such that an effect to improve a water resistance of particles becomes insufficient, and a dispersing effect therefor becomes insufficient. In turn, addition amounts of the organo-metallic compound exceeding 300 parts by weight lead to a certain or more amount of adsorption thereof onto hexaboride particles, and thus lead to a saturated state of a dispersing effect for the particles in a treatment liquid, thereby not only resulting in a disadvantage in cost, but also resulting in such a susceptibility that the fine particles are mutually granulated through the organo-metallic compound and through the silica compound as the surface treatment agent upon removal of the solvent. It is thus likely then to fail to obtain an excellent transparency depending on applications, thereby leading to a disadvantage in cost due to the required considerable usage amount of the organo-metallic compound and a treatment time therefor. Therefore, it is preferable to set the upper limit to be 300 parts by weight, from an industrial standpoint.

### (3) Hydrolyzable silane compound:

In the second step of adding water, an additional organic solvent, and a hydrolyzable silane compound into the liquid dispersion of the hexaboride particles having the organo-metallic compound adsorbed thereon, and then mixing them with one another with stirring, to thereby coat a hydrolysis condensate of the hydrolyzable silane compound onto surfaces of the hexaboride particles having the organo-metallic compound adsorbed thereon; the amount of the hexaboride particles is preferably 1wt% to 50wt% of the mixed solution. Amounts of hexaboride particles less than 1wt% necessitate costs for condensation, solvent removal, and the like, and are thus industrially disadvantageous, while amounts exceeding 50wt% lead to vigorous agglomeration among hexaboride particles themselves when the particles are so fine to have primary particle diameters of 200nm or less, thereby making it difficult for the particles to disperse in a solvent.

Note that the additional organic solvent may be alternatively provided by the organic solvent to be used in the first step, upon addition of water, the additional organic solvent, and the hydrolyzable silane compound into the liquid dispersion of the hexaboride particles having the organo-metallic compound adsorbed thereon. Thus, the additional organic solvent is not necessarily added into the liquid dispersion of the hexaboride particles having the organo-metallic compound adsorbed thereon, in the second step.

Although the hydrolyzable silane compound to be used in the present invention is not particularly limited, examples thereof include a tetrafunctional silane compound represented by the general formula (I): Si(OR¹)₄ (wherein R¹ represents the same or different monovalent hydrocarbon group having 1 to 6 carbon atoms), or a partial hydrolysis product thereof. Further, specific examples of the tetrafunctional silane compound represented by the general formula (I) : Si(OR¹)₄ include tetraalkoxysilanes such as tetramethoxysilane, tetraethoxysilane, tetraisopropoxysilane, and tetrabutoxysilane. Furthermore, specific examples of the partial hydrolysis product of the tetrafunctional silane compound represented by the general formula (I): Si(OR¹)₄ include methyl silicate, ethyl silicate, and the like.

Next, although the addition amount of the hydrolyzable silane compound relative to the hexaboride particles is arbitrary in principle, the addition amount is desirably 0.01 to 100 parts by weight when calculated as silicon dioxide contained in the hydrolyzable silane compound, relative to 1 part by weight of hexaboride particles, if possible. This is because, addition amounts less than 0.01 part by weight lead to lower effects to coat the surfaces of hexaboride particles to occasionally result in insufficient effects for improving a water resistance thereof, while addition amounts exceeding 100 parts by weight lead to failure of additional improvement of water resistance by virtue of surface coatings such that the coating effects are made to be relatively low.

In turn, the additional organic solvent to be added in the second step as required, is not particularly limited insofar as the solvent allows for dissolution therein of a silane compound represented by the general formula (I): Si(OR¹)₄ (wherein R¹ represents the same or different monovalent hydrocarbon group having 1 to 6 carbon atoms), or a partial hydrolysis product thereof, and water, and examples of such an organic solvent include alcohols, cellosolves, ketones, ethers, and the like, where alcohols are preferable. Examples of alcohols include an alcohol solvent represented by a general formula (II): R²OH (wherein R² represents a monovalent hydrocarbon group having 1 to 6 carbon atoms), and specifically, methanol, ethanol, isopropanol, butanol, and the like. Note that hydrolysis rate of the silane compound is to vary depending on the number of carbon atoms of the alcohol, similarly to the above-mentioned organo-metallic compound, so that it is possible to appropriately select a kind of alcohol so as to control an intended coating amount and the like of a silica to be produced. Further, the amount of water to be used at this time is preferably 0.5 to 5 equivalents relative to the number of moles of the alkoxy group of the silane compound represented by the general formula (I) or the partial hydrolysis product thereof.

Further, the hydrolysis and condensation of the tetrafunctional silane compound represented by the general formula (I): Si(OR¹)₄ or the like, is conducted by a known method to drop the tetrafunctional silane compound represented by the general formula (I) into the reaction medium comprising: the hexaboride-particle liquid dispersion which has been previously prepared in the above manner; the organic solvent represented by the general formula (II); and water.

The hydrolyzable silane compound is added into the reaction medium to contact the former with the latter, thereby enabling to conduct a hydrolysis reaction of the silane compound, to progress a polymerization reaction of resultantly produced silicic acid in the reaction medium. Progression of the polymerization reaction of silicic acid produces a silica around each of nuclei made of hexaboride particles previously having the organo-metallic compound adsorbed thereon, and the silica grows to allow for obtainment of hexaboride particles having silica coatings of 3 to 100nm thickness, preferably 5 to 50nm thickness.

While the hydrolysis reaction may be conducted under any pressure including a reduced pressure, ordinary pressure, and increased pressure, it is preferable to conduct the reaction at a temperature equal to or lower than a boiling point of the reaction mixture, and under sufficient stirring. This hydrolysis reaction is to be continued until the silane compound is fully consumed from the reaction mixture which has been formed by adding the silane compound into the reaction medium, such that the hydrolysis reaction can be typically completed in about 1 to 24 hours.

### (4) Heating maturation and Solvent removal:

Next, the third step is conducted to remove the solvent from the hexaboride-particle liquid dispersion (treatment liquid). Examples of a method for solvent removal from the treatment liquid include known ones such as an evaporation method, as well as a filter pressing method, ultrafiltration method, centrifugal separation method, and the like, without limited to these methods.

The reaction mixture, from which the silane compound has been fully consumed, is firstly subjected to a heating maturation for 2 hours or longer, under a condition of a temperature lower than a thermal decomposition temperature of the organo-metallic compound, such as at a temperature equal to or lower than a boiling point of the solvent or the like remaining in the reaction mixture, and preferably at 60 to 100°C. This heating maturation to be conducted after completion of the reaction is effective to fully consume unreacted silane monomers, oligomers, and the like remaining in the reaction mixture, and to restrict production of coagulated clusters including localized silica components of the surface treatment agent coatings and hexaboride particles at the time of solvent removal and drying.

If the solvent is removed in a state that the unreacted silane monomers, oligomers, and the like are still remaining, they act as adhesives among surface-coated hexaboride particles, thereby resultantly producing coagulated clusters of the surface-coated hexaboride particles interconnected through silica components. Then, overloaded energies are required to crack the clusters to cause damages of the coatings, thereby failing to obtain a higher effect for improving the moisture resistance.

In this way, the precursor of surface-coated hexaboride particles of the present invention is obtained.

Further, the thus obtained precursor of surface-coated hexaboride particles is to be appropriately stored, and is to be firedly heated when required and in a required amount thereof under a condition of a temperature at or higher than a thermal decomposition temperature of the organo-metallic compound, in a manner to be turned into a powder of surface-coated hexaboride particles. By firingly heating the precursor of surface-coated hexaboride particles, those coatings derived from the surface treatment agent on the surface-coated hexaboride particles of the precursor which coatings include metal elements and silicon, are densified to enable to more effectively restrict permeation of moisture through the coatings. Note that the heat treatment temperature is determined based on a heat-resistance temperature of the applicable hexaboride, a heating ambient, and the like, in addition to the thermal decomposition temperature of the organo-metallic compound. Hexaborides are started to be oxidized at about 600°C in an atmosphere where oxygen is present, and particularly in the atmospheric air, so that the heat treatment is to be preferably conducted at a temperature, which is equal to or higher than a thermal decomposition temperature of the respective organo-metallic compound but which is equal to or lower than 600°C. Further, although the upper limit of the heating temperature is made to be the decomposition temperature of the applicable hexaboride insofar as in an atmosphere of inert gas including no oxygens, the density change of the surface treatment agent (oxides: including silica as a main component) covering surfaces of hexaboride particles is made to be less in fact at temperatures of 1,000°C or higher (i.e., the effect of densifying function by virtue of the heat treatment is lowered), thereby showing a tendency that the effects for moisture resistance and water resistance are saturated. Thus, the upper limit of the heating temperature is preferably set to be about 1,000°C, from an industrial standpoint.

Next, the powder obtained by firingly heating the particles is subjected to a pulverization treatment, and diameters of surface-coated hexaboride particles after the pulverization are appropriately set within a range of 10nm to 1µm depending on applicable usage purposes. For example, when the surface-coated hexaboride particles are applied to an optically selective transmission film (which is the above-mentioned film configured to transmit therethrough light in a visible-light region and to shield light in a near-infrared region), it is required to take account of scattering due to the particles. Upon giving importance to transparency, the particles are to have diameters of 200nm or less, and preferably 100nm or less. This is because, larger diameters of particles exceeding 200nm lead to scattering of light in a visible-light region of 380nm to 780nm in wavelength due to geometric scattering or Mie scattering in a manner to substantially turn a transmission film into a frosted-glass state, thereby failing to attain a clear transparency. In turn, particle diameters of 200nm or less decrease the above scattering, and enter a Rayleigh scattering region. In the Rayleigh scattering region, scattered light is reduced in inverse proportion to a 6th power of a particle diameter, so that decreased particle diameters reduce scattering to thereby improve transparency of a transmission film. Further, particle diameters of 100nm or less lead to extreme reduction of scattered light, and are thus preferable. Only, such a transparency is not required in some applicable usage purposes, so that particle diameters are to be appropriately set within a range of 10nm to 1µm, as described above.

Examples of a method to be applied to the pulverization treatment include a wet-type pulverizing method utilizing a medium stirring mill such as an ultrasonic homogenizer, and ball mill (bead mill), and a dry-pulverizing method utilizing a jet mill, hammer mill, mortar mill, or the like, without limited thereto. In case of conducting a wet-type pulverization, or in case of dispersing particles in a liquid after conduction of a dry-pulverization, it is effective to use a polymeric dispersant as a mill base, so as to uniformly disperse and hold fine particles in the liquid.

### (5) Article adopting surface-coated hexaboride particles obtained from the precursor:

### (5-a) Hexaboride-particle-coated substrate (structural body):

By using the surface-coated hexaboride particles according to the present invention to form a film containing the surface-coated hexaboride particles therein on a surface of a substrate, it is possible to preferably obtain a hexaboride-particle-coated substrate (a structural body constituted of the substrate and the film) which is excellent in water resistance and chemical stability, and which is preferably utilizable as a solar radiation shielding material. For example, by coating a substrate surface with a dispersion prepared by directly dispersing surface-coated hexaboride particles into a liquid medium such as an organic solvent like alcohol, or water or the like, and by removing the liquid medium such as the organic solvent, water, or the like by a heat treatment, there can be obtained a solar radiation shielding product having a group of hexaboride particles directly laminated on the substrate surface. Note that, when silica coatings of surface-coated hexaboride particles are weak in adhesive force to a substrate, it is possible to firstly laminate the group of hexaboride particles onto a substrate surface, to subsequently coat a coating liquid containing a binder component such as a resin thereon, and to remove a solvent component in the coating liquid therefrom, to thereby obtain a solar radiation shielding product or the like coated with the resin. Note that the resin component is selectable in conformity to the applicable usage, and examples of the resin component include an ultraviolet curable resin, thermosetting resin, cold-curing resin, thermoplastic resin, and the like. It is also possible to prepare a coating liquid containing surface-coated hexaboride particles and a binder component such as a resin, to coat the coating liquid onto a substrate surface, and to remove a solvent component in the coating liquid therefrom, to thereby obtain the above-mentioned solar radiation shielding product or the like.

### (5-b) Hexaboride-particle dispersion:

Next, in case that the surface-coated hexaboride particles are to be utilized in a state that they are dispersed in a liquid medium, examples of the medium include liquid media such as an organic solvent like alcohol, water, and the like, and liquid media such as an organic solvent, water, and the like containing a resin or the like therein. Note that examples of a method for obtaining a dispersion comprising a liquid medium containing surface-coated hexaboride particles dispersed therein, include a method for adding the surface-coated hexaboride particles into a liquid medium such as an organic solvent like alcohol, water, or the like, or into a liquid medium such as an organic solvent, water, or the like containing a resin or the like therein. Further, it is also possible to constitute a solar radiation shielding product or the like in a state that particles are dispersed in a solid medium such as a resin, glass, or the like.

Further, the dispersion comprising a liquid medium such as an organic solvent, water, or the like containing a resin or the like therein and containing surface-coated hexaboride particles dispersed in the liquid medium, may be utilized as a solar radiation shielding product or the like, by coating the dispersion onto a substrate surface to form a film in the above manner, or the dispersion comprising a liquid medium such as an organic solvent, water, or the like containing a resin or the like therein and containing surface-coated hexaboride particles dispersed in the liquid medium, may be utilized as a powdery starting material for a solar radiation shielding product, by drying and heat-treating the dispersion, and subjecting it to a pulverization treatment. Namely, the powdery dispersion comprising a solid medium containing surface-coated hexaboride particles dispersed therein may also be again dispersed into a liquid medium to use the resultant medium as a liquid dispersion for a solar radiation shielding product, or may also be used by kneading the powdery dispersion into a resin. Note that also the diameters of particles in the powdery dispersion subjected to the pulverization treatment are set at appropriate particle diameters within a range of 100nm to 10µm depending on applicable usage purposes.

In turn, the dispersion comprising a solid medium containing surface-coated hexaboride particles dispersed therein, is not limited to the above-described hexaboride-particle dispersion which is present in a state of film on a substrate surface, nor limited to a powdery dispersion, and the dispersion may be in a form of a film shape or board shape having a thickness of 0.1µm to 50mm, for example. In case of kneading into a resin and forming it into a film shape or board shape, it is possible: to directly knead surface-coated hexaboride particles having diameters suitable for the intended purpose, into a resin; or to mix a dispersion comprising a liquid medium containing the surface-coated hexaboride particles dispersed therein, with a resin; or to add a powdery dispersion comprising a solid medium containing surface-coated hexaboride particles dispersed therein, into a liquid medium, and to mix the resultant medium into a resin.

Upon kneading surface-coated hexaboride particles into a resin, it is typical to heatingly mix them at a temperature (about 200 to 300°C) near a melting point of the resin. Further, after mixing into the resin, it is possible to pelletize the mixture, and form the pellets into a film shape or board shape by the respective method. For example, such a forming can be attained by extrusion molding, inflation molding, solution casting, casting, or the like. The thickness of the film, board, or the like at this time may be appropriately set depending on the purpose of use, and the filler amount (i.e., the blending amount of surface-coated hexaboride particles) relative to the resin is variable depending on the thickness of a substrate, required optical characteristics and mechanical characteristics, and the like, such that the filler amount is typically and preferably 50wt% or less relative to the resin.

Further, although resins to be used as base materials of the film, board, and the like are not particularly limited, and selectable in conformity to usages, fluororesins are effective in view of weather resistance. Further, examples of resins which are lower in cost and have higher transparency and wider versatility as compared to fluororesins, include a PET resin, acrylic resin, polyamide resin, vinyl chloride resin, polycarbonate resin, olein resin, epoxy resin, polyimide resin, and the like.

### (5-c) Pulverized hexaboride-particle dispersion (hexaboride-particle dispersed powder):

It is also possible to once pulverize a hexaboride-particle dispersion of the present invention comprising a solid medium containing surface-coated hexaboride particles dispersed therein, into a state of powder, to thereby obtain a hexaboride-particle dispersed powder as a starting material of a solar radiation shielding product. Further, the powder can be again dispersed into a liquid medium in a manner to use the resultant mixture as a liquid dispersion for a solar radiation shielding product, or the powder can be used by mixing it with a powdery or pellet-like resin and by subsequently kneading the resin into another resin by a twin-screw extruder or the like.

The powder is to preferably have particle diameters of 100nm to 10µm. Particle diameters smaller than 100nm lead to increased specific gravity differences relative to powdery or pellet-like resins to thereby make it difficult to achieve uniform kneading upon kneading the powder into a resin by an extrusion molding machine or the like, while particle diameters greater than 10µm disadvantageously lead to deteriorated efficiencies upon highly dispersing the particles into a liquid medium again.

As described above in detail, the surface-coated hexaboride particles obtained from the precursor of surface-coated hexaboride particles according to the present invention, are obtained in a state that the particles have a higher water resistance and are simultaneously less in agglomeration in a medium to thereby keep dispersibility.

Thus, adopting the surface-coated hexaboride particles allows for obtainment of: hexaboride particles which are excellent in water resistance and chemical stability, and which are preferably utilizable as a solar radiation shielding material; a dispersion comprising a liquid medium or solid medium containing the hexaboride particles dispersed therein; and an article such as a film, board, and the like adopting the dispersion.

Although the present invention will be specifically described hereinafter based on Examples thereof, the present invention is not limited to the details of Examples.

Note that the term "visible light transmittance" in Examples means an integrated value of transmitted light amount over a wavelength range of 380nm to 780nm in a manner to be standardized by a visibility of human eye, and is a value indicating a brightness to be sensed by a human eye. In Examples, this value was measured by a method in conformity to JIS A5759 (measurement was conducted for only a film without adhering it onto glass).

Further, the "haze value" of each film was measured based on JIS K7105.

The "average dispersed-particle diameter" was measured by a measurement device (ELS-800 manufactured by Ohtsuka Denshi K.K.) utilizing a dynamic light scattering method, and was provided as an averaged value. Note that the term "average primary particle diameter" and the term "average dispersed-particle diameter" have been distinguishedly used in the present specification. The term "average primary particle diameter" is an average diameter of so-called primary particles to be measured by a TEM observation or the like, while the term "average dispersed-particle diameter" indicates a dispersibility of particles in a medium and refers to an average diameter of secondary particles which are formed of primary particles agglomerated to a certain degree in a liquid.

Concerning an evaluation manner of water resistance, specimens having visible light transmittances of 55% to 65% were immersed in a warm water at 65°C for 7 days, and those were evaluated as excellent which were increased in transmittance by 5 points or less, and those were evaluated as defective which were increased in transmittance by points exceeding 5 points.

Note that the optical characteristic values (visible light transmittance and haze value) used herein refer to such values obtained by including a substrate film (PET film of 100µm thickness, product name "Tetoron HLEW", manufactured by Teijin DuPont Films Japan Limited), and the substrate film itself had a visible light transmittance of 90% and a haze value of 1.9%.

### Example 1

520g of lanthanum hexaboride particles (LaB₆ manufactured by Sumitomo Metal Mining Co., Ltd.) was mixed with stirring into 3,480g of isopropyl alcohol (IPA), and the mixture was subjected to a dispersing treatment by a medium agitation mill, to prepare a liquid dispersion A having an average dispersed-particle diameter of 100nm.

Next, 200g of the liquid dispersion A, 20g of ethyl acetoacetate aluminum diisopropylate (product name "Alumichelate ALCH" manufactured by Kawaken Fine Chemicals Co., Ltd.), and 540g of IPA were mixed with each other with stirring, and the mixture was subjected to a dispersing treatment by an ultrasonic homogenizer.

Next, 100g of water was droppedly added into the mixture while stirring it, over 1 hour; 140g of tetraethoxysilane (ethyl orthosilicate manufactured by Tama Chemical Co., Ltd., at 28.8wt% when calculated as SiO₂) was then droppedly added into the resultant mixture while stirring it, over 2 hours; the resultant liquid was stirred at 20°C for 15 hours, and then heatedly matured at 70°C for 2 hours; and this liquid was subjected to evaporation of solvent therefrom by vacuum drying, to obtain a precursor of surface-coated hexaboride particles according to Example 1.

Subsequently, the obtained precursor of surface-coated hexaboride particles was subjected to a firing heat treatment at 500°C for 1 hour, and the thus obtained powder was dry-pulverized, to obtain surface-coated fine lanthanum hexaboride particles coated with Al₂O₃ of about 5wt% and SiO₂ of about twofold weight relative to the fine lanthanum hexaboride particles.

8g of the obtained fine lanthanum hexaboride particles surface-coated with Al₂O₃/SiO₂, 8g of an organic dispersant, and 84g of toluene were mixed with one another, and subjected to a dispersing treatment, to prepare a liquid dispersion having an average dispersed-particle diameter of 100nm.

Next, 2g of this liquid dispersion and 2g of an ultraviolet curable resin (product name UV3701, manufactured by Toagosei Co., Ltd.) were mixed with each other, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 59.3% and a haze of 2.0%.

Next, the substrate formed with the cured coating was immersed in a warm water at 65°C for 7 days, followed by measurement of a visible light transmittance to show a value of 60.5%, thereby exhibiting an increase of 1.2 points in transmittance. It was thus confirmed that coatings of surface-coated fine lanthanum hexaboride particles included in the cured film were excellent in water resistance.

### Example 2

The same procedure as Example 1 was performed to conduct a surface coating treatment except that: 200g of the liquid dispersion A, 20g of zirconium tributoxy acetyl acetonate (product name: ZC-540 manufactured by Matsumoto Trading Co., Ltd.), and 540g of IPA were mixed with one another with stirring, followed by a dispersing treatment by an ultrasonic homogenizer; to obtain surface-coated fine lanthanum hexaboride particles coated with ZrO₂ of about 5wt% and SiO₂ of about twofold weight relative to the fine lanthanum hexaboride particles.

8g of the obtained fine lanthanum hexaboride particles surface-coated with ZrO₂/SiO₂, 8g of an organic dispersant, and 84g of toluene were mixed with one another, and subjected to a dispersing treatment, to prepare a liquid dispersion having an average dispersed-particle diameter of 100nm.

Next, 2g of this liquid dispersion and 2g of an ultraviolet curable resin (product name UV3701, manufactured by Toagosei Co., Ltd.) were mixed with each other, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 57.2% and a haze of 2.5%.

Next, the substrate formed with the cured coating was immersed in a warm water at 65°C for 7 days, followed by measurement of a visible light transmittance to show a value of 59.1%, thereby exhibiting an increase of 1.9 points in transmittance. It was thus confirmed that coatings of surface-coated fine lanthanum hexaboride particles included in the cured film were excellent in water resistance.

### Example 3

The same procedure as Example 1 was performed to conduct a surface coating treatment except that: 200g of the liquid dispersion A, 20g of tetranormalbutyl titanate (product name: TA-25 manufactured by Matsumoto Trading Co., Ltd.), and 540g of IPA were mixed with one another with stirring, followed by a dispersing treatment by an ultrasonic homogenizer; to obtain surface-coated fine lanthanum hexaboride particles coated with TiO₂ of about 5wt% and SiO₂ of about twofold weight relative to the fine lanthanum hexaboride particles.

8g of the obtained fine lanthanum hexaboride particles surface-coated with TiO₂/SiO₂, 8g of an organic dispersant, and 84g of toluene were mixed with one another, and subjected to a dispersing treatment, to prepare a liquid dispersion having an average dispersed-particle diameter of 100nm.

Next, 2g of this liquid dispersion and 2g of an ultraviolet curable resin (product name UV3701, manufactured by Toagosei Co., Ltd.) were mixed with each other, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 64.7% and a haze of 2.8%.

Next, the substrate formed with the cured coating was immersed in a warm water at 65°C for 7 days, followed by measurement of a visible light transmittance to show a value of 66.5%, thereby exhibiting an increase of 1.8 points in transmittance. It was thus confirmed that coatings of surface-coated fine lanthanum hexaboride particles included in the cured film were excellent in water resistance.

### Comparative Example 1

0.4g of the liquid dispersion A, 1.6g of toluene, and 2 g of an ultraviolet curable resin (product name UV3701, manufactured by Toagosei Co., Ltd.) were mixed with each other with stirring, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 56.8% and a haze of 2.0%.

Next, the substrate formed with the cured coating was immersed in a warm water at 65°C for 7 days, followed by measurement of a visible light transmittance to show a value of 64.9%, thereby exhibiting an increase of 8.1 points in transmittance. It was thus confirmed that fine lanthanum hexaboride particles included in the cured film were defective in water resistance.

### Comparative Example 2

200g of the liquid dispersion A, 560g of IPA, and 100g of water were mixed with one another, and 140g of tetraethoxysilane (ethyl orthosilicate manufactured by Tama Chemical Co., Ltd., at 28.8wt% when calculated as SiO₂) was then droppedly added into the resultant mixture while stirring it, over 2 hours; the resultant liquid was then matured for 15 hours; and the liquid was further heatedly matured at 70°C for 2 hours.

Next, this liquid was vacuum dried to vaporize a solvent therefrom, followed by a firing heat treatment at 500°C for 1 hour, to obtain a powder, which was then dry-pulverized to obtain silica-coated fine lanthanum hexaboride particles.

8g of the silica-coated fine lanthanum hexaboride particles, 8g of an organic dispersant, and 84g of toluene were mixed with one another, and subjected to a dispersing treatment, to prepare a liquid dispersion having an average dispersed-particle diameter of 100nm.

Next, 2g of this liquid dispersion and 2g of an ultraviolet curable resin (product name UV3701, manufactured by Toagosei Co., Ltd.) were mixed with each other, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 55.8% and a haze of 0%.

Next, the substrate formed with the cured coating was immersed in a warm water at 65°C for 7 days, followed by measurement of a visible light transmittance to show a value of 62.3%, thereby exhibiting an increase of 6.5 points in transmittance. It was thus confirmed that coatings of silica-coated fine lanthanum hexaboride particles included in the cured film were defective in water resistance.

### Comparative Example 3

520g of lanthanum hexaboride particles (LaB₆ manufactured by Sumitomo Metal Mining Co., Ltd.), 3,480g of water, and 100g of tetra-n-propoxy zirconium (product name: ZA-40 manufactured by Matsumoto Trading Co., Ltd.) were mixed with one another with stirring, resulting in that the tetra-n-propoxy zirconium was hydrolyzed and the hydrolyzates vigorously agglomerated such that the agglomerates themselves were separated from the solution and precipitated therein. Further, this mixed solution was subjected to a dispersing treatment by a medium agitation mill, to obtain a gel-like dispersion containing agglomerates of tetra-n-propoxy zirconium and agglomerated particles of lanthanum hexaboride in a mutually independently mixed state.

140g of tetraethoxysilane (ethyl orthosilicate manufactured by Tama Chemical Co., Ltd., at 28.8wt% when calculated as SiO₂) was then droppedly added into the gel-like dispersion while stirring it, over 2 hours; the resultant liquid was stirred at 20°C for 15 hours, followed by heating maturation at 70°C for 2 hours; resulting in deposition of silica onto agglomerates of tetra-n-propoxy zirconium and lanthanum hexaboride particles, to form bulky clusters, thereby making it difficult to achieve a coating treatment of lanthanum hexaboride particles for the purpose of improving a water resistance thereof.

### Comparative Example 4

Since the coating treatment of lanthanum hexaboride particles for the purpose of improving a water resistance thereof was difficult in Comparative Example 3, the same coating treatment as Comparative Example 3 was conducted while adding isopropyl alcohol (IPA) as an organic solvent.

Namely, 520g of lanthanum hexaboride particles (LaB₆ manufactured by Sumitomo Metal Mining Co., Ltd.), 960g of isopropyl alcohol (IPA), 2,000g of water, and 520g of tetra-n-propoxy zirconium (product name: ZA-40 manufactured by Matsumoto Trading Co., Ltd.) were mixed with one another with stirring, and the mixture was subjected to a dispersing treatment by a medium agitation mill, to prepare a liquid dispersion B having an average dispersed-particle diameter of 260nm.

Next, 200g of the liquid dispersion B and 660g of IPA were mixed with each other with stirring, and the mixture was subjected to a dispersing treatment by an ultrasonic homogenizer.

Next, 140g of tetraethoxysilane (ethyl orthosilicate manufactured by Tama Chemical Co., Ltd., at 28.8wt% when calculated as SiO₂) was then droppedly added into the resultant mixture while stirring it, over 2 hours; the resultant liquid was stirred at 20°C for 15 hours, and then heatedly matured at 70°C for 2 hours.

Subsequently, 2g of this liquid and 2g of an ultraviolet curable resin (product name UV3701, manufactured by Toagosei Co., Ltd.) were mixed with each other, to prepare a coating liquid.

Further, using a PET film having a thickness of 100µm as a substrate, the coating liquid was coated onto the PET film (substrate) by a bar coater, thereby forming a coating. The coating was dried at 70°C for 1 minute to vaporize a solvent therefrom, followed by irradiation of ultraviolet rays by a high-pressure mercury lamp, to thereby cure the coating. At this time, the cured coating had a visible light transmittance of 59.3% and a haze of 13.8%.

The substrate formed with the cured coating was immersed in a warm water at 65°C for 7 days, followed by measurement of a visible light transmittance to show a value of 67.2%, thereby exhibiting an increase of 7.9 points in transmittance.

It was thus confirmed that coatings of surface-coated fine lanthanum hexaboride particles (corresponding to precursor of surface-coated fine lanthanum hexaboride particles, which was not firedly heated yet) included in the cured film were defective in water resistance.

### POSSIBILITY OF INDUSTRIAL APPLICATION

The surface-coated hexaboride particles to be obtained by using the precursor of surface-coated hexaboride particles of the present invention is excellent in water resistance and chemical stability, so that the surface-coated hexaboride particles are suitably used as a solar radiation shielding material to be added into a coated film, various kneaded-resin substrates, laminated glasses, and the like.

## Claims

1. A production method of a precursor of surface-coated hexaboride particles to be used in production of surface-coated hexaboride particles formed with silica coating layers, respectively, the method comprising:
a first step of adding an organo-metallic compound having a function for dispersing hexaboride particles and a function for promoting polymerization of a hydrolyzable silane compound, into a hexaboride-particle liquid dispersion consisting of an organic solvent containing hexaboride particles having an average primary particle diameter of 10nm to 1µm dispersed therein, and then mixing them with each other with stirring, to thereby adsorb the organo-metallic compound onto surfaces of the hexaboride particles;
a second step of adding, into the liquid dispersion of the hexaboride particles having the organo-metallic compound adsorbed thereon, a hydrolyzable silane compound as a surface treatment agent, and water, and then mixing them with one another with stirring, to thereby coat a hydrolysis condensate of the hydrolyzable silane compound onto surfaces of the hexaboride particles having the organo-metallic compound adsorbed thereon; and
a third step of heatingly maturing the hexaboride-particle liquid dispersion under a condition of a temperature lower than a thermal decomposition temperature of the organo-metallic compound, and then removing a solvent from the liquid dispersion, to form coatings derived from the surface treatment agent and coated on the hexaboride particles, respectively, the coatings each including a metal element contained in the organo-metallic compound, and silicon.

2. A precursor of surface-coated hexaboride particles obtained by the production method of a precursor of surface-coated hexaboride particles according to claim 1, wherein the precursor of surface-coated hexaboride particles comprises:
hexaboride particles each comprising: at least one element selected from Y, La, Ce, Pr, Nd, Sm, Eu, Gd, Tb, Dy, Ho, Er, Tm, Yb, Lu, Sr and Ca; and boron; the hexaboride particles having an average primary particle diameter of 10nm to 1µm;
adsorption layers of the organo-metallic compound adsorbed on the surfaces of the hexaboride particles, respectively; and
the coatings derived from the surface treatment agent and formed on the adsorption layers, respectively, the coatings each including the metal element in the organo-metallic compound, and silicon.

3. The precursor of surface-coated hexaboride particles according to claim 2, wherein the organo-metallic compound is added in an amount of 0.05 parts by weight to 300 parts by weight when calculated as a metal element, relative to 100 parts by weight of the hexaboride particles.

4. The precursor of surface-coated hexaboride particles according to claim 2, wherein the organo-metallic compound comprises one, two or more kinds selected from an aluminum alcoholate compound or polymer thereof, a cyclic aluminum oligomer, an aluminum chelate compound containing an alkoxy group, a zirconium alcoholate compound or polymer thereof, a zirconium chelate compound, and a titanium alcoholate compound or polymer thereof, and a titanium chelate compound.

5. The precursor of surface-coated hexaboride particles according to claim 2, wherein the hexaboride particles comprise lanthanum boride.

6. Surface-coated hexaboride particles obtained by heat-treating the precursor of surface-coated hexaboride particles according to any one of claims 2 to 5 under a condition of a temperature at or higher than a thermal decomposition temperature of the organo-metallic compound, wherein the surface-coated hexaboride particles comprise:
hexaboride particles each comprising: at least one element selected from Y, La, Ce, Pr, Nd, Sm, Eu, Gd, Tb, Dy, Ho, Er, Tm, Yb, Lu, Sr and Ca; and boron; the hexaboride particles having an average primary particle diameter of 10nm to 1µm;
metal oxide layers formed by thermal decomposition of the adsorption layers of the organo-metallic compound adsorbed on the surfaces of the hexaboride particles, respectively; and
silica coating layers formed on the metal oxide layers, respectively, the silica coating layers each including an oxide of the metal element in the organo-metallic compound.

7. A structural body comprising:
a substrate; and
a film provided on a surface of the substrate, and containing the surface-coated hexaboride particles according to claim 6.

8. A hexaboride-particle dispersion comprising:
a medium comprising a liquid medium or solid medium; and
the surface-coated hexaboride particles according to claim 6, the surface-coated hexaboride particles being dispersed in the medium.

9. The hexaboride-particle dispersion according to claim 8, wherein the solid medium comprises a resin or a glass.

10. The hexaboride-particle dispersion according to claim 9, wherein the medium comprises a solid medium, and
wherein the hexaboride-particle dispersion comprising the surface-coated hexaboride particles dispersed in the solid medium is in a film shape or board shape having a thickness of 0.1µm to 50mm, or
wherein the medium comprises a solid medium, and
wherein the hexaboride-particle dispersion comprising the surface-coated hexaboride particles dispersed in the solid medium comprises a film formed on a surface of a substrate.

11. The hexaboride-particle dispersion according to claim 8, wherein the medium comprises a liquid medium, and
wherein the liquid medium comprises an organic solvent and/or water, or an organic solvent and/or water containing a resin dissolved or dispersed therein.

12. The hexaboride-particle dispersion according to claim 9, wherein the medium comprises a solid medium, and
wherein the hexaboride-particle dispersion comprising the surface-coated hexaboride particles dispersed in the solid medium is provided in a powdery state by a pulverization treatment.

13. The hexaboride-particle dispersion according to claim 12, wherein the hexaboride particles have diameters of 100nm to 10µm.

14. Use of the hexaboride-particle dispersion according to claim 11, 12 or 13 to form an article.

## Patentansprüche

1. Herstellungsverfahren eines Vorläufers von oberflächenbeschichteten Hexaboridteilchen, der bei der Herstellung von oberflächenbeschichteten Hexaboridteilchen zu verwenden ist, die jeweils mit Siliciumoxidbeschichtungsschichten gebildet sind, wobei das Verfahren umfasst:
einen ersten Schritt des Zugebens einer metallorganischen Verbindung, die eine Eigenschaft zum Dispergieren von Hexaboridteilchen und eine Eigenschaft zum Fördern der Polymerisation einer hydrolisierbaren Silanverbindung aufweist, in eine flüssige Hexaboridteilchen-Dispersion, die aus einem organischen Lösungsmittel besteht, das darin dispergierte Hexaboridteilchen mit einem durchschnittlichen primären Teilchendurchmesser von 10 nm bis 1 µm enthält, und anschließend miteinander Mischen dieser durch Rühren, um dadurch die metallorganische Verbindung auf Oberflächen der Hexaboridteilchen zu adsorbieren;
einen zweiten Schritt des Zugebens einer hydrolisierbaren Silanverbindung als ein Oberflächenbehandlungsmittel und Wasser in die flüssige Dispersion der Hexaboridteilchen mit der darauf adsorbierten metallorganischen Verbindung und anschließend miteinander Mischen dieser durch Rühren, um dadurch ein Hydrolysekondensat der hydrolisierbaren Silanverbindung auf Oberflächen der Hexaboridteilchen mit der darauf adsorbierten metallischorganischen Verbindung zu beschichten; und
einen dritten Schritt des wärmebedingten Reifens der flüssigen Hexaboridteilchen-Dispersion unter einer Temperaturbedingung, die niedriger als eine thermische Zersetzungstemperatur der metallorganischen Verbindung ist, und anschließend Entfernen eines Lösungsmittels aus der flüssigen Dispersion, um Beschichtungen zu bilden, die sowohl aus dem Oberflächenbehandlungsmittel abstammen als auch auf den Hexaboridteilchen beschichtet sind, wobei die Beschichtungen jeweils ein Metallelement, das in der metallorganischen Verbindung enthalten ist, und Silicium enthalten.

2. Vorläufer von oberflächenbeschichteten Hexaboridteilchen, der durch das Herstellungsverfahren eines Vorläufers von oberflächenbeschichteten Hexaboridteilchen nach Anspruch 1 erhalten ist, wobei der Vorläufer von oberflächenbeschichteten Hexaboridteilchen umfasst:
Hexaboridteilchen, die jeweils umfassen: zumindest ein Element, das aus Y, La, Ce, Pr, Nd, Sm, Eu, Gd, Tb, Dy, Ho, Er, Tm, Yb, Lu, Sr und Ca ausgewählt ist; und Bor; wobei die Hexaboridteilchen einen durchschnittlichen primären Teilchendurchmesser von 10 nm bis 1 µm aufweisen;
Adsorptionsschichten der metallorganischen Verbindung, die jeweils auf den Oberflächen der Hexaboridteilchen adsorbiert sind; und
die Beschichtungen, die sowohl aus dem Oberflächenbehandlungsmittel abstammen als auch auf den Adsorptionsschichten gebildet sind, wobei die Beschichtungen jeweils das Metallelement in der metallorganischen Verbindung und Silicium enthalten.

3. Vorläufer von oberflächenbeschichteten Hexaboridteilchen nach Anspruch 2, wobei die metallorganische Verbindung in einer Menge von 0,05 Gewichtsteilen bis 300 Gewichtsteilen relativ zu 100 Gewichtsteilen der Hexaboridteilchen zugegeben ist, wenn als ein Metallelement berechnet.

4. Vorläufer von oberflächenbeschichteten Hexaboridteilchen nach Anspruch 2, wobei die metallorganische Verbindung eine, zwei oder mehr Arten umfasst, die aus einer Aluminiumalkoholatverbindung oder einem Polymer davon, einem zyklischen Aluminiumoligomer, einer Aluminiumchelatverbindung, die eine Alkoxygruppe enthält, einer Zirkoniumalkoholatverbindung oder einem Polymer davon, einer Zirkoniumchelatverbindung, und einer Titanalkoholatverbindung oder einem Polymer davon und einer Titanchelatverbindung ausgewählt ist.

5. Vorläufer von oberflächenbeschichteten Hexaboridteilchen nach Anspruch 2, wobei die Hexaboridteilchen Lanthanborid umfassen.

6. Oberflächenbeschichtete Hexaboridteilchen, die durch Wärmebehandeln des Vorläufers von oberflächenbeschichteten Hexaboridteilchen nach einem der Ansprüche 2 bis 5 unter einer Temperaturbedingung bei oder höher als eine thermische Zersetzungstemperatur der metallorganischen Verbindung erhalten sind, wobei die oberflächenbeschichteten Hexaboridteilchen umfassen:
Hexaboridteilchen, die jeweils umfassen: zumindest ein Element, das aus Y, La, Ce, Pr, Nd, Sm, Eu, Gd, Tb, Dy, Ho, Er, Tm, Yb, Lu, Sr und Ca ausgewählt ist; und Bor, wobei die Hexaboridteilchen einen durchschnittlichen primären Teilchendurchmesser von 10 nm bis 1 µm aufweisen;
Metalloxidschichten, die durch thermische Zersetzung der Adsorptionsschichten der metallorganischen Verbindung, die jeweils auf den Oberflächen der Hexaboridteilchen adsorbiert sind, gebildet sind; und
Siliciumoxidbeschichtungsschichten, die jeweils auf den Metalloxidschichten gebildet sind, wobei die Siliciumoxidbeschichtungsschichten jeweils ein Oxid des Metalls in der metallorganischen Verbindung beinhalten.

7. Strukturkörper, der umfasst:
ein Substrat; und
einen Film, der auf einer Oberfläche des Substrats bereitgestellt ist, und der oberflächenbeschichtete Hexaboridteilchen nach Anspruch 6 enthält.

8. Hexaboridteilchendispersion, die umfasst:
ein Medium, das ein flüssiges Medium oder festes Medium umfasst; und
die oberflächenbeschichteten Hexaboridteilchen nach Anspruch 6, wobei die oberflächenbeschichteten Hexaboridteilchen in dem Medium dispergiert sind.

9. Hexaboridteilchendispersion nach Anspruch 8, wobei das feste Medium ein Harz oder ein Glas umfasst.

10. Hexaboridteilchendispersion nach Anspruch 9, wobei das Medium ein festes Medium umfasst, und
wobei die Hexaboridteilchendispersion, die die oberflächenbeschichteten Hexaboridteilchen dispergiert in dem festen Medium umfasst, in einer Filmform oder Plattenform mit einer Dicke von 0,1 µm bis 50 mm ist, oder
wobei das Medium ein festes Medium umfasst, und
wobei die Hexaboridteilchendispersion, die die oberflächenbeschichteten Hexaboridteilchen dispergiert in dem festen Medium umfasst, einen Film umfasst, der auf einer Oberfläche eines Substrats gebildet ist.

11. Hexaboridteilchendispersion nach Anspruch 8, wobei das Medium ein flüssiges Medium umfasst, und
wobei das flüssige Medium ein organisches Lösungsmittel und/oder Wasser, oder ein organisches Lösungsmittel und/oder Wasser, das ein darin gelöstes oder dispergiertes Harz enthält, umfasst.

12. Hexaboridteilchendispersion nach Anspruch 9, wobei das Medium ein festes Medium umfasst, und
wobei die Hexaboridteilchendispersion, die die oberflächenbeschichteten Hexaboridteilchen dispergiert in dem festen Medium umfasst, in einem pulverartigen Zustand durch eine Pulverisierungsbehandlung bereitgestellt ist.

13. Hexaboridteilchendispersion nach Anspruch 12, wobei die Hexaboridteilchen Durchmesser von 100 nm bis 10 µm aufweisen.

14. Verwendung der Hexaboridteilchendispersion nach Anspruch 11, 12 oder 13, um einen Gegenstand zu bilden.

## Revendications

1. Procédé de production d'un précurseur de particules d'hexaborure revêtues en surface à utiliser dans la production de particules d'hexaborure revêtues en surface formées avec des couches de revêtement de silice, respectivement, le procédé comprenant :
une première étape qui consiste à ajouter un composé organométallique ayant une fonction consistant à disperser des particules d'hexaborure et une fonction consistant à favoriser la polymérisation d'un composé de silane hydrolysable, dans une dispersion liquide de particules d'hexaborure constituée d'un solvant organique contenant des particules d'hexaborure ayant un diamètre moyen de particules primaires allant de 10 nm de 1 µm dispersées dedans, et à les mélanger ensuite l'un(e) avec l'autre sous agitation, pour adsorber ainsi le composé organométallique sur des surfaces des particules d'hexaborure ;
une deuxième étape qui consiste à ajouter, dans la dispersion liquide des particules d'hexaborure ayant le composé organométallique adsorbé sur celles-ci, un composé de silane hydrolysable en tant qu'agent de traitement de surface, et de l'eau, et à les mélanger ensuite l'un avec l'autre sous agitation, pour déposer ainsi un condensat d'hydrolyse du composé de silane hydrolysable sur les surfaces des particules d'hexaborure ayant le composé organométallique adsorbé sur celles-ci ; et
une troisième étape de maturation thermique de la dispersion liquide de particules d'hexaborure dans une condition d'une température inférieure à une température de décomposition thermique du composé organométallique, et à éliminer ensuite un solvant de la dispersion liquide, pour former des revêtements dérivés de l'agent de traitement de surface et déposés sur les particules d'hexaborure, respectivement, les revêtements comportant chacun un élément métallique contenu dans le composé organométallique, et du silicium.

2. Précurseur de particules d'hexaborure revêtues en surface obtenu par le procédé de production d'un précurseur de particules d'hexaborure revêtues en surface selon la revendication 1, dans lequel le précurseur de particules d'hexaborure revêtues en surface comprend :
des particules d'hexaborure comprenant chacune : au moins un élément choisi parmi Y, La, Ce, Pr, Nd, Sm, Eu, Gd, Tb, Dy, Ho, Er, Tm, Yb, Lu, Sr et Ca ; et le bore ; les particules d'hexaborure ayant un diamètre moyen de particules primaires allant de 10 nm à 1 µm ;
des couches d'adsorption du composé organométallique adsorbé sur les surfaces des particules d'hexaborure, respectivement ; et
les revêtements dérivés de l'agent de traitement de surface et formés sur les couches d'adsorption, respectivement, les revêtements comportant chacun l'élément métallique dans le composé organométallique, et du silicium.

3. Précurseur de particules d'hexaborure revêtues en surface selon la revendication 2, dans lequel le composé organométallique est ajouté en une quantité allant de 0,05 partie en poids à 300 parties en poids lorsqu'il est calculé en tant qu'élément métallique, par rapport à 100 parties en poids des particules d'hexaborure.

4. Précurseur de particules d'hexaborure revêtues en surface selon la revendication 2, dans lequel le composé organométallique comprend une, deux ou plusieurs type(s) choisi(s) parmi un composé d'alcoolate d'aluminium ou un polymère de celui-ci, un oligomère d'aluminium cyclique, un composé de chélate d'aluminium contenant un groupe alcoxy, un composé d'alcoolate de zirconium ou un polymère de celui-ci, un composé de chélate de zirconium, et un composé d'alcoolate de titane ou un polymère de celui-ci, et un composé de chélate de titane.

5. Précurseur de particules d'hexaborure revêtues en surface selon la revendication 2, dans lequel les particules d'hexaborure comprennent du borure de lanthane.

6. Particules d'hexaborure revêtues en surface obtenues par le traitement thermique du précurseur de particules d'hexaborure revêtues en surface selon l'une quelconque des revendications 2 à 5 dans une condition d'une température supérieure ou égale à une température de décomposition thermique du composé organométallique, où les particules d'hexaborure revêtues en surface comprennent :
des particules d'hexaborure comprenant chacune : au moins un élément choisi parmi Y, La, Ce, Pr, Nd, Sm, Eu, Gd, Tb, Dy, Ho, Er, Tm, Yb, Lu, Sr et Ca ; et le bore ; les particules d'hexaborure ayant un diamètre moyen de particules primaires allant de 10 nm à 1 µm ;
des couches d'oxyde métallique formées par la décomposition thermique des couches d'adsorption du composé organométallique adsorbé sur les surfaces des particules d'hexaborure, respectivement ; et
des couches de revêtement de silice formées sur les couches d'oxyde métallique, respectivement, les couches de revêtement de silice comportant chacune un oxyde de l'élément métallique dans le composé organométallique.

7. Corps structurel comprenant :
un substrat ; et
un film prévu sur une surface du substrat, et contenant les particules d'hexaborure revêtues en surface selon la revendication 6.

8. Dispersion de particules d'hexaborure, comprenant :
un milieu comprenant un milieu liquide ou un milieu solide ; et
les particules d'hexaborure revêtues en surface selon la revendication 6, les particules d'hexaborure revêtues en surface étant dispersées dans le milieu.

9. Dispersion de particules d'hexaborure selon la revendication 8, dans laquelle le milieu solide comprend une résine ou un verre.

10. Dispersion de particules d'hexaborure selon la revendication 9, dans laquelle le milieu comprend un milieu solide, et
dans laquelle la dispersion de particules d'hexaborure comprenant les particules d'hexaborure revêtues en surface dispersées dans le milieu solide est sous forme de film ou sous forme de panneau ayant une épaisseur allant de 0,1 µm à 50 mm, ou
dans laquelle le milieu comprend un milieu solide, et
dans laquelle la dispersion de particules d'hexaborure comprenant les particules d'hexaborure revêtues en surface dispersées dans le milieu solide comprend un film formé sur une surface d'un substrat.

11. Dispersion de particules d'hexaborure selon la revendication 8, dans laquelle le milieu comprend un milieu liquide, et
dans laquelle le milieu liquide comprend un solvant organique et/ou de l'eau, ou un solvant organique et/ou de l'eau contenant une résine dissoute ou dispersée dedans.

12. Dispersion de particules d'hexaborure selon la revendication 9, dans laquelle le milieu comprend un milieu solide, et
dans laquelle la dispersion de particules d'hexaborure comprenant les particules d'hexaborure revêtues en surface dispersées dans le milieu solide est prévue dans un état pulvérulent par un traitement de pulvérisation.

13. Dispersion de particules d'hexaborure selon la revendication 12, dans laquelle les particules d'hexaborure ont des diamètres allant de 100 nm à 10 µm.

14. Utilisation de la dispersion de particules d'hexaborure selon la revendication 11, 12 ou 13 pour former un article.
